# EUROPEAN PATENT APPLICATION

(11) **EP 4 641 728 A1**
(43) Date of publication of application: **29.10.2025**
(21) Application number: 24863201.0
(22) Date of filing: 05.09.2024
(51) Int. Cl.: H01M 10/052, H01M 4/525, H01M 4/505, H01M 4/48, H01M 4/587, H01M 4/38, H01M 10/04, H01M 4/02

(54) **LITHIUM SECONDARY BATTERY, BATTERY MODULE, AND BATTERY PACK**

(30) Priority: 05.09.2023 KR 20230117757; 04.09.2024 KR 20240120190
(71) Applicant: LG Energy Solution, Ltd., Seoul 07335 (KR)
(72) Inventor: LEE, Su Min, Daejeon 34122 (KR); SHIN, Sun Young, Daejeon 34122 (KR); LEE, Yong Ju, Daejeon 34122 (KR)
(74) Representative: Hoffmann Eitle
(86) International application number: PCT/KR2024/013371
(87) International publication number: WO 2025/053622

(57) **Abstract**

The present invention relates to a lithium secondary including: a positive containing a positive electrode active material; a negative electrode containing a negative electrode active material; a separator provided between the positive electrode and the negative electrode; and an electrolyte, wherein the positive electrode active material includes a lithium composite transition metal compound including nickel (Ni), cobalt (Co), and manganese (Mn); the lithium composite transition metal compound includes at least one of single particles and quasi-single particles, the average particle diameter (D50 =) of the at least one of the single particle and the pseudo-single particle having an average particle diameter (D50) of 1 µm to 10 µm (both inclusive); the single particle is composed of one nodule and the pseudo-single particle is a composite composed of 30 or less nodules; and the negative electrode active material includes silicon oxide represented by SiOx (0<x<2), the silicon oxide represented by SiOx (0<x<2) having an average particle diameter (D50) of 1 µm or greater, and at least one of the single particles and pseudo-single particles having an average particle diameter (D50) smaller than the average particle diameter (D50) of the silicon oxide represented by SiOx(0<x<2).

## Description

### [Technical Field]

This application claims priority to and the benefit of Korean Patent Application No. 10-2023-0117757 filed in the Korean Intellectual Property Office on September 5, 2023 and Korean Patent Application No. 10-2024-0120190 filed in the Korean Intellectual Property Office on September 4, 2024, the entire contents of which are incorporated herein by reference.

The present application relates to a lithium secondary battery, a battery module, and a battery pack.

### [Background Art]

Recently, with the rapid spread of electronic devices using batteries, such as mobile phones, laptop computers, electric vehicles, electrically-powered tools and cleaners, the demand for small, lightweight, and relatively high-capacity and/or high-output secondary batteries is rapidly increasing. In particular, a lithium secondary battery is in the limelight as a driving power source for electronic devices because it is lightweight and has a high energy density. Accordingly, research and development efforts to improve the performance of the lithium secondary battery are being actively conducted.

In the lithium secondary battery, in a state in which an organic electrolytic solution or a polymer electrolytic solution is filled between a positive electrode and a negative electrode each made of an active material capable of intercalation and deintercalation of lithium ions, electrical energy is produced by oxidation/reduction reactions at a time when lithium ions are intercalated/deintercalated into/from the positive electrode and the negative electrode.

Lithium cobalt oxide (LiCoO₂), lithium nickel oxide (LiNiO₂), lithium manganese oxide (LiMnO₂ or LiMn₂O₄, etc.), a lithium iron phosphate compound (LiFePO₄) or the like has been used as a positive electrode active material of the lithium secondary battery. Among these materials, since the lithium cobalt oxide (LiCoO₂) is advantageous in that its operating voltage is high and capacity characteristics are excellent, the lithium cobalt oxide (LiCoO₂) is widely used and is applied as a positive electrode active material for high voltage. However, since there is a limitation in using a large amount of the lithium cobalt oxide as a power source for applications, such as electric vehicles, due to the rising price and unstable supply of cobalt (Co), there emerges a need to develop a positive electrode active material capable of replacing the lithium cobalt oxide.

Accordingly, a nickel cobalt manganese-based lithium composite transition metal compound (hereinafter, simply referred to as 'NCM-based lithium composite transition metal compound'), in which a portion of cobalt (Co) is substituted with nickel (Ni) and manganese (Mn), has been developed. Recently, research is being conducted to increase the capacity by increasing a content of Ni in the NCM-based lithium composite transition metal compound. However, in the case of a Ni-rich positive electrode active material having a high nickel content, there are disadvantages such as a deterioration in thermal stability, an increase in resistance due to an increase in side reactions during an electrochemical reaction, and an increase in gas generation.

Graphite is mainly used as a negative electrode active material of the lithium secondary battery. However, graphite has a low capacity per unit mass of 372 mAh/g, making it difficult to increase the capacity of the lithium secondary battery. Accordingly, in order to increase the capacity of the lithium secondary battery, negative electrode materials such as silicon, tin, and oxides thereof have been developed as non-carbon-based negative electrode materials having higher energy densities than graphite. Although such non-carbon-based negative electrode materials have the high capacity, but the initial efficiency is low. Therefore, there are problems in that lithium consumption during initial charging and discharging is high and irreversible capacity loss is large.

### Citation List

### Patent Literature

Korean Patent Application Publication No. 10-2021-0070933

### [Detailed Description of the Invention]

### [Technical Problem]

The present inventors have found that optimal battery performance can be realized in a lithium secondary battery designed in a limited space through a specific combination of types of active materials constituting the positive electrode and the negative electrode, average particle diameters, and/or contents of each component, resulting in the present invention.

### [Technical Solution]

An exemplary embodiment of the present application provides a lithium secondary battery including: a positive electrode including a positive electrode active material; a negative electrode including a negative electrode active material; a separator provided between the positive electrode and the negative electrode; and an electrolyte, wherein the positive electrode active material includes a lithium composite transition metal compound including nickel (Ni), cobalt (Co), and manganese (Mn), wherein the lithium composite transition metal compound includes at least one of single particles and quasi-single particles, and an average particle diameter (D50) of at least one of the single particles and the quasi-single particles is 1 µm or greater and 10 µm or less, wherein the single particles are each composed of one nodule, and the quasi-single particles are each a composite composed of 30 or fewer nodules, wherein the negative electrode active material includes a silicon oxide represented by SiOₓ (0 < x < 2), and an average particle diameter (D50) of the silicon oxide represented by SiOₓ (0 < x < 2) is 1 µm or greater, and wherein the average particle diameter (D50) of at least one of the single particles and the quasi-single particles is smaller than the average particle diameter (D50) of the silicon oxide represented by SiOₓ (0 < x < 2), and a battery module and a battery pack including the lithium secondary battery.

### [Advantageous Effects]

According to the exemplary embodiments described herein, the energy density of the lithium secondary battery designed in a limited space can be increased, and high-output performance and battery cycle performance can be improved.

### [Best Mode]

Hereinafter, the present invention will be described in more detail for better understanding of the present invention. The present invention may be implemented in various different forms, and is not limited to the exemplary embodiments described herein. The terms or words used throughout the specification and the claims should not be construed as being limited to their ordinary or dictionary meanings, but construed as having meanings and concepts consistent with the technical idea of the present invention, based on the principle that an inventor may properly define the concepts of the words or terms to best explain the invention.

It will be further understood that the terms "comprises", "includes" or "have" when used in the present specification specify the presence of stated features, integers, steps, constitutional elements and/or combinations thereof, but do not preclude the presence or addition of one or more other features, integers, steps, constitutional elements, and/or combinations thereof.

Further, it will be understood that when an element such as a layer is referred to as being "on" another element, it can be "directly on" the other element or an intervening element may also be present. In contrast, when an element is referred to as being "directly on" another element, there are no intervening elements present. Further, when an element is referred to as being "above" or "on" a reference portion, the element is positioned above or below the reference portion, and it does not necessarily mean that the element is positioned "above" or "on" in a direction opposite to gravity.

In "and/or" of the present specification, 'or' indicates that one of the listed items is selected, and 'and' indicates all of the listed items. For example, 'A and/or B' indicates that both a case of 'A and B' and a case of 'A or B' are described together.

In the present specification" the term "single particle" may refer to a particle composed of a single nodule. The "nodule" may be a single crystal without any crystal grain boundaries, or alternatively, it may be a polycrystal in which grain boundaries are not visible when observed at a magnification of 5000× to 20000× using a scanning electron microscope (SEM). In the present specification" the "quasi-single particle" may be an agglomerate composed of 30 or fewer nodules. In the present specification, a "secondary particle" refers to a particle formed by agglomeration of several tens to several hundreds of primary particles. More specifically, the secondary particle may include a particle formed by agglomeration of 50 or more primary particles.

In the present specification, a "particle" may include at least one of a single particle, a quasi-single particle, a primary particle, a nodule, and a secondary particle.

In the present specification, an "average particle diameter (D50)" may be defined as a particle diameter corresponding to 50% of the cumulative volume in the particle diameter distribution curve of particles. The average particle diameter (D50) may be measured using, for example, a laser diffraction method. In the laser diffraction method, in general, particle diameters ranging from a submicron region to several millimeters can be measured, and results with high reproducibility and high resolvability can be obtained.

The measurement of the average particle diameter (D50) may be confirmed using water and Triton-X100 dispersant with a Microtrac apparatus (manufacturer: Microtrac model name: S3500). Specifically, the average particle diameter (D50) of a positive electrode active material may be measured within a range of a refractive index of 1.5 to 1.7, and the average particle diameter (D50) of a negative electrode active material may be measured under a condition of a refractive index of 1.97 or 2.42. For example, after dispersing particles in a dispersion medium, the resulting dispersion is introduced into a commercially available laser diffraction particle size measuring device and irradiated with an ultrasonic wave of about 28 kHz with an output of 60 W. Thereafter, a cumulative volume particle size distribution graph is obtained, and then the average particle diameter may be determined by obtaining the particle size corresponding to 50% of the cumulative volume.

An exemplary embodiment of the present application provides a lithium secondary battery including: a positive electrode including a positive electrode active material; a negative electrode including a negative electrode active material; a separator provided between the positive electrode and the negative electrode; and an electrolyte, wherein the positive electrode active material includes a lithium composite transition metal compound including nickel (Ni), cobalt (Co), and manganese (Mn), wherein the lithium composite transition metal compound includes at least one of single particles and quasi-single particles, and an average particle diameter (D50) of at least one of the single particles and the quasi-single particles is 1 µm or greater and 10 µm or less, wherein the single particles are each composed of one nodule, and the quasi-single particles are each a composite composed of 30 or fewer nodules, wherein the negative electrode active material includes a silicon oxide represented by SiOₓ (0 < x < 2), and an average particle diameter (D50) of the silicon oxide represented by SiOₓ (0 < x < 2) is 1 µm or greater, and wherein the average particle diameter (D50) of at least one of the single particles and the quasi-single particles is smaller than the average particle diameter (D50) of the silicon oxide represented by SiOₓ (0 < x < 2).

A lithium secondary battery has a size required depending on its application, and accordingly, should be designed in a limited space. Consumer demands for increased energy density and improved high-output performance are increasing, but when a positive electrode material with high capacity is used, a content of the negative electrode material should be correspondingly increased to adapt to the positive electrode material. Accordingly, there is a limit to increasing battery efficiency in a limited space. In addition, it is necessary to design a positive electrode material having efficiency adapted to the efficiency of the negative electrode material, depending on the type of negative electrode material.

For example, the energy density may be improved, but when the electrode density is increased by decreasing the porosity of the positive electrode, strong rolling for this purpose may cause deterioration in battery performance due to cracks generated in particles.

The single particles and/or quasi-single particles used in the exemplary embodiment of the present application have high intrinsic rigidity, exhibiting relatively excellent resistance to battery performance degradation, even when the electrode density is high. Therefore, it is possible to increase the energy density by combining the single particles and/or quasi-single particles and the silicon oxide represented by SiOₓ (0 < x < 2) according to the average particle diameter ranges.

In particular, the lithium secondary battery according to the present application has a feature of using silicon oxide represented by SiOₓ (0 < x < 2) among silicon-based active materials. Specifically, compared to other silicon-based active materials (e.g., Si/C), when the aforementioned active material is used, the electrode quality, i.e., the adhesion to the electrode, is improved.

In an exemplary embodiment of the present application, the silicon oxide represented by SiOₓ (0 < x < 2) may be doped with magnesium metal or lithium metal.

The silicon oxide represented by SiOₓ (0 < x < 2) according to the present application may be used without doping, or may also be used while being doped as described above. When using the silicon oxide while being doped, silicate is formed in advance in the silicon oxide, thereby reducing the irreversible capacity during initial charging, and thus increasing the energy density of the cell.

According to an additional exemplary embodiment of the present application, the positive electrode active material includes a lithium composite transition metal compound including nickel (Ni), cobalt (Co), and manganese (Mn), the lithium composite transition metal compound includes single particles and/or quasi-single particles, and an average particle diameter (D50) of the single particles and/or quasi-single particles may be 1 µm or greater and 10 µm or less.

As the average particle diameter (D50) of the single particles and/or quasi-single particles decreases, the specific surface area increases and side reactions with the electrolytic solution increase, which may deteriorate electrochemical performance such as a service life. If the average particle diameter (D50) of the single particles and/or quasi-single particles is less than 1 µm, it may fall outside a commercially applicable range, and even if such single particles and/or quasi-single particles are present, the service life performance is significantly reduced due to the increased specific surface area, making it difficult to apply.

When the average particle diameter (D50) of the single particles and/or quasi-single particles is 1 µm or greater, 2 µm or greater, or 3 µm or greater, side reactions of the single particles and/or quasi-single particles with the electrolytic solution are reduced, resulting in excellent service life performance.

At the same time, the negative electrode active material includes silicon oxide represented by SiOₓ (0 < x < 2), the average particle diameter (D50) of the silicon oxide represented by SiOₓ (0 < x < 2) is 1 µm or greater, and the average particle diameter (D50) of the single particles and/or quasi-single particles is smaller than the average particle diameter (D50) of the silicon carbon composite.

As the average particle diameter (D50) of the silicon oxide represented by SiOₓ (0 < x < 2) decreases, the specific surface area increases and side reactions with the electrolytic solution increase, which may deteriorate electrochemical performance such as a service life. If the average particle diameter (D50) of the silicon oxide represented by SiOₓ (0 < x < 2) is less than 1 µm, the service life performance is significantly reduced due to the increased side reactions resulting from the increased specific surface area, making it difficult to apply.

When the average particle diameter (D50) of the silicon oxide represented by SiOₓ (0 < x < 2) is 1 µm or greater, 3 µm or greater, 4 µm or greater, or 5 µm or greater, the side reactions with the electrolytic solution are reduced, resulting in excellent service life performance.

The silicon oxide represented by SiOₓ (0 < x < 2) has excellent service life performance when in the above range of average particle diameter (D50), has excellent initial capacity and efficiency compared to other silicon-based materials such as silicon carbon composite, and also has excellent electrochemical performance, making it possible to realize optimal battery performance through a combination with the average particle diameter of the single particles and/or quasi-single particles.

The single particles and/or quasi-single particles may have excellent particle strength even if they are formed with a small particle diameter, and accordingly, the increase in micro-particles in an electrode due to particle breakage is alleviated, which can improve the service life characteristics of the battery.

When the average particle diameter (D50) of the single particles and/or quasi-single particles is smaller than the average particle diameter (D50) of the silicon oxide represented by SiOₓ (0 < x < 2), the diffusion resistance of the single particles and/or quasi-single particles can be relatively reduced, leading to improved service life performance. That is, lithium enters the single particles and/or quasi-single particles during discharging, and as the average particle diameter (D50) of the single particles and/or quasi-single particles increases, the diffusion resistance may increase. If the average particle diameter (D50) of the single particles and/or quasi-single particles is larger than the average particle diameter (D50) of the silicon oxide represented by SiOₓ (0 < x < 2), lithium may not enter the single particles and/or quasi-single particles but may be precipitated due to relatively increased diffusion resistance, which may deteriorate battery performance and reduce service life performance.

In addition, when the average particle diameter (D50) of the single particles and/or quasi-single particles is smaller than the average particle diameter (D50) of the silicon oxide represented by SiOₓ (0 < x < 2), side reactions with the electrolytic solution due to the increased specific surface area of the single particles and/or quasi-single particles are prevented, leading to improved service life performance.

When the average particle diameter (D50) of the single particles and/or quasi-single particles is smaller than the average particle diameter (D50) of the silicon oxide represented by SiOₓ (0 < x < 2), the diffusion resistance of the single particles and/or quasi-single particles can be relatively reduced, leading to improved service life performance.

Since the single particles and/or quasi-single particles have a high lithium diffusion resistance compared to silicon oxide represented by SiOₓ (0 < x < 2), if the average particle diameter (D50) of the single particles and/or quasi-single particles is larger than the average particle diameter (D50) of the silicon oxide represented by SiOₓ (0 < x < 2), charging/discharging may not be performed efficiently due to the increased lithium diffusion resistance, which may lead to a deterioration in service life performance. Accordingly, the average particle diameter (D50) of the single particles and/or quasi-single particles may be smaller than the average particle diameter (D50) of the silicon oxide represented by SiOₓ (0 < x < 2).

According to an additional exemplary embodiment of the present application, the positive electrode active material may include nickel, cobalt, and manganese, and may further include aluminum. That is, the positive electrode active material may further include aluminum.

In the present specification, the positive electrode active material may include 80 mol% or more and less than 100 mol% of nickel among metals except for lithium, and the lithium composite transition metal compound including 80 mol% or more and less than 100 mol% of nickel among metals except for lithium may include one species or a mixture of two or more species represented by Chemical Formula 1 below.

Additionally, the lithium composite transition metal compound may include single particles and/or quasi-single particles and secondary particles.

[Chemical Formula 1] LiₐNi_{1-b-c-d}Co_{b}Mn_{c}Q_{d}O_{2+δ}

In the Chemical Formula, Q is any one or more elements selected from the group consisting of Na, K, Mg, Ca, Sr, Ni, Co, Ti, Al, Si, Sn, Mn, Cr, Fe, V, and Zr, and 1 ≤ a ≤ 1.5, 0 < b ≤ 0.5, 0 < c ≤ 0.5, 0 ≤ d ≤ 0.1, 0 < b+c+d ≤ 20, and -0.1 ≤ δ ≤ 1.0.

In the lithium composite transition metal compound of Chemical Formula 1, Li may be included in an amount corresponding to a, i.e., 1 ≤ a ≤ 1.5. If a is less than 1, the capacity may be lowered, and if a exceeds 1.5, the particles are sintered in a firing process, making it difficult to manufacture the positive electrode active material. Considering the balance between the improvement in capacity characteristics of the positive electrode active material and the sinterability during the manufacturing of the active material according to the Li content control, Li may be more preferably included in an amount of 1.1 ≤ a ≤ 1.2.

In the lithium composite transition metal compound of Chemical Formula 1, Ni may be included in an amount corresponding to 1-(b+c+d), for example, 0.8 ≤ 1-(b+c+d) < 1. When the content of Ni in the lithium composite transition metal compound of Chemical Formula 1 is 0.8 or more, an amount of Ni enough to contribute to charge and discharge is secured and high capacity can be promoted. The content of Ni, 1-(b+c+d), may be 0.88, preferably 0.9 or more, and more preferably 0.93 or more. Preferably, the content of Ni, 1-(b+c+d), may be 0.99 or less or 0.95 or less.

In the lithium composite transition metal compound of Chemical Formula 1, Co may be included in an amount corresponding to b, i.e., 0 < b ≤ 0.5. If the content of Co in the lithium composite transition metal compound of Chemical Formula 1 exceeds 0.5, there is a concern about cost increase. Considering the remarkable improvement effect in capacity characteristics according to the inclusion of Co, the Co may be more specifically included in a content of 0.03 ≤ b ≤ 0.2.

In the lithium composite transition metal compound of Chemical Formula 1, Mn may be included in a content corresponding to c, i.e., a content of 0 < c ≤ 0.5. If c in the lithium composite transition metal compound of Chemical Formula 1 exceeds 0.5, there is a concern that the output characteristics and capacity characteristics of the battery will instead deteriorate, and more specifically, Mn may be included in a content of 0.01 ≤ c ≤ 0.2.

In the lithium composite transition metal oxide of Chemical Formula 1, Q may be a doping element included in a crystal structure of the lithium composite transition metal compound, and Q may be included in a content corresponding to d, i.e., 0 ≤ d ≤ 0.1. Q may be one or two or more selected from Na, K, Mg, Ca, Sr, Ni, Co, Ti, Al, Si, Sn, Mn, Cr, Fe, V, and Zr, and for example, Q may be Al.

According to an additional exemplary embodiment of the present application, in the positive electrode active material, the lithium composite transition metal compound may include single particles and/or quasi-single particles and secondary particles.

The single-particles and/or quasi-single particles may be manufactured by mixing and firing a transition metal precursor and a lithium source material. The secondary particles may be manufactured by a method different from that of the single particles and/or quasi-single particles, and the composition thereof may be the same as or different from that of the single particles and/or quasi-single particles.

For example, the firing is performed at a temperature at which the single particles and/or quasi-single particles can be formed. To this end, the firing should be performed at a temperature higher than that of the secondary particles. For example, when the composition of the precursor is the same, the firing should be performed at a temperature higher than that of the secondary particles by about 30°C to 100°C. The firing temperature for forming the single particles and/or quasi-single particles may vary depending on the metal composition in the precursor. For example, when forming single particles and/or quasi-single particles with a high-Ni NCM-based lithium composite transition metal oxide having a nickel (Ni) content of 80 mol% or more, the firing temperature may be about 700°C to 1000°C, and preferably about 800°C to 950°C. When the firing temperature falls within the above range, a positive electrode active material including single particles and/or quasi-single particles with excellent electrochemical properties can be manufactured. If the firing temperature is below 700°C, a positive electrode active material containing a lithium composite transition metal compound in the form of secondary particles may be manufactured, and if the firing temperature exceeds 950°C, excessive firing occurs and a layered crystal structure is not properly formed, so that the electrochemical properties may be deteriorated.

In the present specification, the term "single particle" and/or "quasi-single particle" is used to distinguish it from conventional secondary particles formed by the agglomeration of tens to hundreds of primary particles.

Specifically, in the present invention, the single particle is composed of one nodule, and the quasi-single particle is a composite composed of 30 or fewer nodules. On the other hand, the secondary particle may be in the form of agglomerates of tens to hundreds of primary particles.

According to an additional exemplary embodiment of the present application, the average particle diameter (D50) of the single particles and/or quasi-single particles is 1 µm or greater and 10 µm or less, and the average particle diameter (D50) of the silicon oxide represented by SiOₓ (0 < x < 2) is 1 µm or greater.

The average particle diameter (D50) of the above single particles and/or quasi-single particles may be 1 µm or greater and 10 µm or less, and the average particle diameter (D50) of the silicon oxide represented by SiOₓ (0 < x < 2) may exceed 1 µm.

According to an exemplary embodiment of the present application, the average particle diameter (D50) of the single particles and/or quasi-single particles is 10 µm or less, and the average particle diameter (D50) of the silicon oxide represented by SiOₓ (0 < x < 2) is less than 15 µm.

For example, the average particle diameter (D50) of the single particles and/or quasi-single particles may be 1 µm or greater and 10 µm or less, 2 µm or greater and 10 µm or less, 3 µm or greater and 10 µm or less, greater than 1 µm and 10 µm or less, greater than 2 µm and 10 µm or less, or greater than 2 µm and 5 µm or less.

The single particles and/or quasi-single particles may have excellent strength even when formed with small particle diameters such as an average particle diameter (D50) of 1 µm or greater and 10 µm or less. For example, the single particles and/or quasi-single particles may have a particle strength of 100 MPa to 300 MPa during roll-pressing with a force of 650 kgf/cm². Accordingly, even when the single particles and/or quasi-single particles are roll-pressed with a strong force of 650 kgf/cm², the increase in micro-particles in an electrode due to particle breakage is alleviated, which improves the service life characteristics of the battery.

When the average particle diameter (D50) of the single particles and/or quasi-single particles falls within the above range, side reactions of the single particles and/or quasi-single particles with the electrolytic solution are reduced, leading to excellent service life performance, and charging and discharging are performed efficiently, resulting in excellent electrochemical performance.

If the average particle diameter (D50) of the single particles and/or quasi-single particles is less than 1 µm, the service life performance may be very low due to the increased specific surface area, making it difficult to apply.

When the average particle diameter (D50) of the single particles and/or quasi-single particles is 10 µm or less, charging and discharging are performed efficiently, leading to excellent electrochemical performance.

The method of forming the single particles and/or quasi-single particles is not particularly limited, but generally the single particles and/or quasi-single particles can be formed by over-firing with raised firing temperature, or may be manufactured by using additives such as grain growth promoters that help over-firing, or by changing a starting material.

According to an additional exemplary embodiment of the present application, the average particle diameter (D50) of the silicon oxide represented by SiOₓ (0 < x < 2) may be 1 µm or greater and less than 15 µm, 2 µm or greater and 14 µm or less, or 3 µm or greater and 13 µm or less.

The silicon oxide represented by SiOₓ (0 < x < 2) can improve the service life characteristics of the battery even when it is formed with small particle diameters such as an average particle diameter (D50) of 1 µm or greater and less than 15 µm. For example, when the average particle diameter (D50) of the silicon oxide represented by SiOₓ (0 < x < 2) falls within the range of 1 µm or greater and less than 15 µm, the volume expansion and contraction rate during charging and discharging can be reduced, resulting in improved service life performance. In addition, the specific surface area can be prevented from increasing excessively, thereby preventing side reactions with the electrolytic solution due to cycling and improving the service life performance.

When the average particle diameter (D50) of the silicon oxide represented by SiOₓ (0 < x < 2) is less than 1 µm, the service life performance may be significantly reduced due to the increased specific surface area, making it difficult to apply.

When the average particle diameter (D50) of the silicon oxide represented by SiOₓ (0 < x < 2) is less than 15 µm, the particles are small, enabling charging and discharging to be efficiently performed, and reducing the volume expansion and contraction rate of the particles during charging and discharging, leading to improved service life performance.

According to an additional exemplary embodiment of the present application, the average particle diameter (D50) of the single particles and/or quasi-single particles is smaller than the average particle diameter (D50) of the silicon oxide represented by SiOₓ (0 < x < 2). Thus, the single particles and/or quasi-single particles may have excellent particle strength even if they are formed with a small particle diameter, and accordingly, the increase in micro-particles in an electrode due to particle breakage is alleviated, which can improve the service life characteristics of the battery.

When the average particle diameter (D50) of the single particles and/or quasi-single particles is smaller than the average particle diameter (D50) of the silicon oxide represented by SiOₓ (0 < x < 2), the diffusion resistance of the single particles and/or quasi-single particles, which have a higher lithium diffusion resistance compared to the silicon oxide represented by SiOₓ (0 < x < 2), can be relatively reduced, leading to improved service life performance.

According to an exemplary embodiment of the present application, the average particle diameter (D50) of the single particles and/or quasi-single particles may be 1 µm to 12 µm smaller than the average particle diameter (D50) of the silicon oxide represented by SiOₓ (0 < x < 2).

The average particle diameter (D50) of the single particles and/or quasi-single particles may be 1.5 µm to 11.5 µm, or 2 µm to 11 µm smaller than the average particle diameter (D50) of the silicon oxide represented by SiOₓ (0 < x < 2).

The average particle diameter (D50) of the single particles and/or quasi-single particles may be 2 µm or greater, or 4 µm or greater, smaller than the average particle diameter (D50) of the silicon oxide represented by SiOₓ (0 < x < 2). The average particle diameter (D50) of the single particles and/or quasi-single particles may be 11 µm or less, 8 µm or less, or 6 µm or less, smaller than the average particle diameter (D50) of the silicon oxide represented by SiOₓ (0 < x < 2).

When the average particle diameter (D50) of the single particles and/or quasi-single particles is smaller than the average particle diameter (D50) of the silicon oxide represented by SiOₓ (0 < x < 2), for example, when the above range is satisfied, the diffusion resistance of the single particles and/or quasi-single particles can be relatively reduced, leading to improved service life performance. That is, as the average particle diameter (D50) of the single particles and/or quasi-single particles increases, the diffusion resistance may increase, and when the average particle diameter (D50) of the single particles and/or quasi-single particles is larger than the average particle diameter (D50) of the silicon oxide represented by SiOₓ (0 < x < 2), as the diffusion resistance relatively increases, lithium precipitation, etc. may occur, which may deteriorate battery performance and reduce service life performance.

In addition, when the average particle diameter (D50) of the single particles and/or quasi-single particles is smaller than the average particle diameter (D50) of the silicon oxide represented by SiOₓ (0 < x < 2), for example, when the above range is satisfied, side reactions with the electrolytic solution due to the increased specific surface area can be prevented, leading to improved service life performance.

According to an exemplary embodiment of the present application, a ratio of the average particle diameter (D50) of the single particles and/or quasi-single particles to the average particle diameter (D50) of the silicon oxide represented by SiOₓ (0 < x < 2) is 1.5:2 to 1.5:20.

The ratio of the average particle diameter (D50) of the single particles and/or quasi-single particles to the average particle diameter (D50) of the silicon oxide represented by SiOₓ (0 < x < 2) may be 1.5:2 to 1.5:19 or 1.5:2 to 1.5:18.

The ratio of the average particle diameter (D50) of the single particles and/or quasi-single particles to the average particle diameter (D50) of the silicon oxide represented by SiOₓ (0 < x < 2) may be 1.5:2 or greater, 1.5:2.5 or greater, 1.5:3.5 or greater, or 1.5:4.5 or greater. The ratio of the average particle diameter (D50) of the single particles and/or quasi-single particles to the average particle diameter (D50) of the silicon carbon composite may be 1.5:18 or less, 1.5:16 or less, 1.5:14 or less, 1.5:12 or less, or 1.5:10 or less.

When the above range is satisfied, the diffusion resistance of the single particles and/or quasi-single particles is relatively reduced, which can lead to improved service life performance. That is, as the average particle diameter (D50) of the single particles and/or quasi-single particles increases, the diffusion resistance may increase, and when the average particle diameter (D50) of the single particles and/or quasi-single particles is larger than the average particle diameter (D50) of the silicon oxide represented by SiOₓ (0 < x < 2), as the diffusion resistance relatively increases, lithium precipitation, etc. may occur, which may deteriorate battery performance and reduce service life performance.

In addition, when the average particle diameter (D50) of the single particles and/or quasi-single particles is smaller than the average particle diameter (D50) of the silicon oxide represented by SiOₓ (0 < x < 2), for example, when the above range is satisfied, side reactions with the electrolytic solution due to the increased specific surface area can be prevented, leading to improved service life performance.

In an exemplary embodiment of the present application, the lithium composite transition metal compound may further include secondary particles, and the average particle diameter (D50) of the single particles and/or quasi-single particles may be smaller than an average particle diameter (D50) of the secondary particles.

In the present invention, the single particle may be composed of one nodule, and the quasi-single particle may be in the form of a composite composed of 30 or fewer nodules.

The above-described lithium composite transition metal compound may further include secondary particles. The secondary particle refers to a form formed by agglomeration of primary particles, and can be distinguished from the concept of a single particle composed of one nodule or a quasi-single particle, which is an agglomerate composed of 30 or fewer nodules.

The secondary particle may have an average particle diameter (D50) of 1 to 20 µm, 2 to 17 µm, and preferably 3 to 15 µm. The specific surface area (BET) of the secondary particles may be 0.05 m²/g to 10 m²/g, preferably 0.1 m²/g to 1 m²/ g, and more preferably 0.3 m²/g to 0.8 m²/g.

In an additional exemplary embodiment of the present application, the secondary particle may be an agglomerate of primary particles, and an average particle diameter (D50) of the primary particles may be **0.5** to 3 µm. Specifically, the secondary particle may be in an agglomerate form of hundreds of primary particles, and the average particle diameter (D50) of the primary particles may be **0.6 to 2.8** µm, 0.8 to 2.5 µm, or 0.8 to 1.5 µm.

When the average particle diameter (D50) of the agglomerated primary particles in the secondary particles falls within the above range, a positive electrode active material of single particles and/or quasi-single particles with excellent electrochemical properties can be formed. If the average particle diameter (D50) of the agglomerated primary particles in the secondary particles is too small, the number of agglomerates of primary particles forming lithium nickel-based oxide particles increases, reducing the effect of suppressing particle breakage during roll-pressing, and if the average particle diameter (D50) of the agglomerated primary particles in the secondary particles is too large, a lithium diffusion path inside the primary particles may be lengthened, increasing a resistance and degrading an output characteristic.

According to an additional exemplary embodiment of the present application, the average particle diameter (D50) of the single particles and/or quasi-single particles is smaller than the average particle diameter (D50) of the secondary particles. Thus, the single particles and/or quasi-single particles may have excellent particle strength even if they are formed with a small particle diameter, and accordingly, the increase in micro-particles in an electrode due to particle breakage is alleviated, which can improve the service life characteristics of the battery.

In an exemplary embodiment of the present application, the average particle diameter (D50) of the single particles and/or quasi-single particles may be 1 µm to 18 µm smaller than the average particle diameter (D50) of the secondary particles.

For example, the average particle diameter (D50) of the single particles and/or quasi-single particles may be 1 µm to 16 µm smaller, 1.5 µm to 15 µm smaller, or 2 µm to 14 µm smaller than the average particle diameter (D50) of the secondary particles.

The average particle diameter (D50) of the single particles and/or quasi-single particles may be 1 µm or greater, 2 µm or greater, 4 µm or greater, or 6 µm or greater, smaller than the average particle diameter (D50) of the secondary particles. The average particle diameter (D50) of the single particles and/or quasi-single particles may be 18 µm or less, 16 µm or less, 14 µm or less, 12 µm or less, 10 µm or less, or 8 µm or less, smaller than the average particle diameter (D50) of the secondary particles.

When the average particle diameter (D50) of the single particles and/or quasi-single particles is smaller than the average particle diameter (D50) of the secondary particles, for example, when the above range is satisfied, the single particles and/or quasi-single particles may have excellent particle strength even if they are formed with a small particle diameter, and as a result, the increase in micro-particles in an electrode due to particle breakage is alleviated, which improves the service life characteristics and energy density of the battery.

In an exemplary embodiment of the present application, the negative electrode active material may further include graphite, and the average particle diameter (D50) of the silicon oxide represented by SiOₓ (0 < x < 2) may be smaller than an average particle diameter (D50) of the graphite.

When the average particle diameter (D50) of the silicon oxide represented by SiOₓ (0 < x < 2) is smaller than the average particle diameter (D50) of the graphite, the particle breakage is reduced due to a decrease in the volume expansion/contraction rate during charging and discharging, which leads to improved service life performance of the battery.

According to an exemplary embodiment of the present application, the average particle diameter (D50) of the silicon oxide represented by SiOₓ (0 < x < 2) is 1 µm to 25 µm smaller than the average particle diameter (D50) of the graphite.

For example, the average particle diameter (D50) of the silicon oxide represented by SiOₓ (0 < x < 2) may be 2 µm to 24 µm smaller, 3 µm to 23 µm smaller, or 4 µm to 22 µm smaller than the average particle diameter (D50) of the graphite.

The average particle diameter (D50) of the silicon oxide represented by SiOₓ (0 < x < 2) may be smaller than the average particle diameter (D50) of the graphite by 1 µm or greater, 2 µm or greater, 3 µm or greater, 4 µm or greater, 5 µm or greater, 6 µm or greater, 7 µm or greater, 8 µm or greater, 9 µm or greater, or 10 µm or greater. The average particle diameter (D50) of the silicon oxide represented by SiOₓ (0 < x < 2) may be smaller than the average particle diameter (D50) of the graphite by 25 µm or less, 23 µm or less, 22 µm or less, 20 µm or less, 18 µm or less, 16 µm or less, or 14 µm or less.

When the average particle diameter (D50) of the silicon oxide represented by SiOₓ (0 < x < 2) is smaller than the average particle diameter (D50) of the graphite, for example, when the above range is satisfied, the service life performance of the battery is improved.

In an exemplary embodiment of the present application, the lithium composite transition metal compound further includes secondary particles, the negative electrode active material further includes graphite, and when the average particle diameters (D50) of the secondary particles, the single particles and/or the quasi-single particles, the graphite, and the silicon oxide represented by SiOₓ (0 < x < 2) are denoted as A, B, C, and D, respectively, a relationship B < D ≤ A < C is satisfied.

The exemplary embodiments of the secondary particles, the single particles and/or the quasi-single particles, the graphite, and the silicon oxide represented by SiOₓ (0 < x < 2) are as described above.

When the average particle diameters (D50) of the secondary particles, the single particles and/or the quasi-single particles, the graphite, and the silicon oxide represented by SiOₓ (0 < x < 2) are denoted as A, B, C and D, respectively, and satisfy a relationship B < D ≤ A < C, the service life performance of the battery is improved.

According to an exemplary embodiment of the present application, the negative electrode active material further includes graphite, and when the average particle diameters (D50) of the single particles and/or quasi-single particles, the graphite, and the silicon oxide represented by SiOₓ (0 < x < 2) are denoted as B, C and D, respectively, a relationship B < D < C is satisfied.

The average particle diameters (D50) of the secondary particles, the single particles and/or quasi-single particles, and the silicon oxide represented by SiOₓ (0 < x < 2) are denoted as A, B and D, respectively, and may satisfy a relationship B < D ≤ A.

When the average particle diameters (D50) of the secondary particles, the single particles and/or quasi-single particles, and the graphite are denoted as A, B, and C, respectively, a relationship B < A < C may be satisfied.

When the average particle diameters (D50) of the secondary particles, the graphite, and the silicon oxide represented by SiOₓ (0 < x < 2) are denoted as A, C, and D, respectively, a relationship D ≤ A < C may be satisfied.

When the above ranges are satisfied, the service life performance of the battery is improved.
In an exemplary embodiment of the present invention, in the lithium secondary battery according to the exemplary embodiment described above, the single particles and/or quasi-single particles may be included in an amount of 15 to 100 parts by weight relative to 100 parts by weight of the positive electrode active material, and the silicon oxide represented by SiOₓ (0 < x < 2) may be included in an amount of 3 to 30 parts by weight relative to 100 parts by weight of the negative electrode active material.

According to an additional exemplary embodiment of the present application, the single particles and/or quasi-single particles may be included in an amount of 15 to 100 parts by weight relative to 100 parts by weight of the positive electrode active material. The single particles and/or quasi-single particles may be included in an amount of 20 to 100 parts by weight, 30 to 100 parts by weight, 40 to 100 parts by weight, or 50 to 100 parts by weight relative to 100 parts by weight of the positive electrode active material.

For example, the single particles and/or quasi-single particles may be included in an amount of 15 parts by weight or more, 20 parts by weight or more, 25 parts by weight or more, 30 parts by weight or more, 35 parts by weight or more, 40 parts by weight or more, 45 parts by weight or more, or 50 parts by weight or more relative to 100 parts by weight of the positive electrode active material. The single particles and/or quasi-single particles may be included in an amount of 100 parts by weight or less relative to 100 parts by weight of the positive electrode active material.

When the single particles and/or quasi-single particles are included within the above range, excellent battery characteristics may be exhibited in combination with the negative electrode material described above. In particular, when the single particles and/or quasi-single particles are included in an amount of 15 parts by weight or more, the increase in micro-particles in an electrode due to particle breakage during the roll pressing after fabrication of an electrode is alleviated, which can improve the service life characteristics of the battery.

In an exemplary embodiment of the present application, the lithium composite transition metal compound may further include secondary particles, and the secondary particles may be included in an amount of 0 to 85 parts by weight, 0 to 70 parts by weight, or 0 to 50 parts by weight relative to 100 parts by weight of the positive electrode active material.

The secondary particles may be included in an amount of 85 parts by weight or less, 80 parts by weight or less, 75 parts by weight or less, 70 parts by weight or less, 65 parts by weight or less, 60 parts by weight or less, 55 parts by weight or less, or 50 parts by weight or less relative to 100 parts by weight of the positive electrode active material. The secondary particles may be included in an amount of 0 part by weight or more, or 20 parts by weight or more relative to 100 parts by weight of the positive electrode active material.

When the above range is satisfied, the aforementioned effects due to the presence of the single particles and/or quasi-single particles in the positive electrode active material can be maximized. In the case in which the positive electrode active material of the secondary particles is included, the components thereof may be the same as or different from those exemplified in the positive electrode active material of single particles and/or quasi-single particles described above, and may mean an agglomerate form of single particles.

In an exemplary embodiment of the present application, the positive electrode active material in 100 parts by weight of the positive electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an additional exemplary embodiment of the present application, the positive electrode according to the exemplary embodiment described above may further include a positive electrode binder and a conductive material.

The positive electrode binder may serve to improve adhesion between particles of the positive electrode active material and adhesive force between particles of the positive electrode active material and the positive electrode current collector. For the positive electrode binder, those known in the art may be used. Non-limiting examples thereof may include polyvinylidene fluoride (PVDF), polyvinylidenefluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM), sulfonated-EPDM, styrene butadiene rubber (SBR), fluoro rubber, various copolymers thereof, and the like, and any one thereof alone or a mixture of two or more thereof may be used.

The positive electrode binder may be included in an amount of 0.1 part by weight or more and 50 parts by weight or less, for example, preferably 0.3 part by weight or more and 35 parts by weight or less, and more preferably 0.5 part by weight or more and 20 parts by weight or less on the basis of 100 parts by weight of the positive electrode active material layer.

The conductive material included in the positive electrode active material layer is used to impart conductivity to the electrode, and can be used without particular limitation as long as the conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

Specifically, in an exemplary embodiment, the conductive material may include one or more of a single-walled carbon nanotube (SWCNT) and a multi-walled carbon nanotube (MWCNT). The conductive material may be included in an amount of 0.1 part by weight or more and 2 parts by weight or less, for example, preferably 0.3 part by weight or more and 1.5 parts by weight or less, and more preferably 0.5 part by weight or more and 1.2 parts by weight or less on the basis of 100 parts by weight of a composition for formation of a positive electrode active material layer.

According to the exemplary embodiment of the present application, the negative electrode active material layer may include 3 to 30 parts by weight of silicon oxide represented by SiOₓ (0 < x < 2) of 100 parts by weight of the total negative electrode active material. According to an example, the negative electrode active material layer may include 3 to 20 parts by weight, or 3 to 13 parts by weight, preferably 5 to 10 parts by weight of silicon oxide represented by SiOₓ (0 < x < 2) of 100 parts by weight of the total negative electrode active material.

The negative electrode active material layer may include 3 parts by weight or more, 4 parts by weight or more, or 5 parts by weight or more of silicon oxide represented by SiOₓ (0 < x < 2) of 100 parts by weight of the total negative electrode active material. The negative electrode active material layer may include 30 parts by weight or less, 20 parts by weight or less, or 10 parts by weight or less of silicon oxide represented by SiOₓ (0 < x < 2) of 100 parts by weight of the total negative electrode active material.

Silicon oxide represented by SiOₓ (0 < x < 2) is used within the aforementioned range, so that excellent battery characteristics may be exhibited in combination with the positive electrode material described above. In particular, when silicon oxide represented by SiOₓ (0 < x < 2) is included in an amount of 3 parts by weight or more, the effects resulting from the use of the silicon oxide represented by SiOₓ (0 < x < 2) can be sufficiently exhibited. In addition, since silicon oxide represented by SiOₓ (0 < x < 2) has a lower capacity than SiC active material, it can be used in excess compared to SiC. In particular, when silicon oxide represented by SiOₓ (0 < x < 2) is included in an amount of 30 parts by weight or less, expansion during charging and discharging can be prevented, leading to improved cycle characteristics.

According to a further embodiment of the present application, in the lithium secondary battery according to the embodiment, the negative electrode active material may further include a carbon-based active material. Specifically, the carbon-based active material may be graphite. The graphite may be natural graphite, artificial graphite, or a mixture thereof. The graphite may be included in an amount of 70 parts by weight or more and 97 parts by weight or less based on 100 parts by weight of the total negative electrode active material included in the negative electrode active material layer.

The graphite may be included in an amount of 75 parts by weight or more, 80 parts by weight or more, or 85 parts by weight or more, based on 100 parts by weight of the total negative electrode active material. The graphite may be included in an amount of 95 parts by weight or less, 93 parts by weight or less, or 90 parts by weight or less based on 100 parts by weight of the total negative electrode active material. When the graphite is a mixture of artificial graphite and natural graphite, the artificial graphite and natural graphite may be included in a ratio of 90:10 to 50:50 parts by weight, 85:15 to 60:40 parts by weight, or 80:20 to 65:35 parts by weight based on 100 parts by weight of the graphite.

In an exemplary embodiment of the present application, the negative electrode active material in 100 parts by weight of the negative electrode active material layer may be included in an amount of 80 parts by weight or more and 99.9 parts by weight or less, preferably 90 parts by weight or more and 99.9 parts by weight or less, more preferably 95 parts by weight or more and 99.9 parts by weight or less, and even more preferably 98 parts by weight or more and 99.9 parts by weight or less.

According to an additional exemplary embodiment of the present application, in the lithium secondary battery according to the exemplary embodiment described above, the negative electrode active material layer may further include a negative electrode binder, in addition to silicon oxide represented by SiOₓ (0 < x < 2) and graphite.

The negative electrode binder may serve to improve adhesion between particles of the negative electrode active material and adhesive force between particles of the negative electrode active material and the negative electrode current collector. For the negative electrode binder, those known in the art may be used. Non-limiting examples thereof may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder may be included in an amount of 0.1 part by weight or more and 50 parts by weight or less, for example, preferably 0.3 part by weight or more and 35 parts by weight or less, and more preferably 0.5 part by weight or more and 10 parts by weight or less based on 100 parts by weight of the negative electrode active material layer.

The negative electrode active material layer may not include a conductive material, but may further include a conductive material if necessary. The conductive material included in the negative electrode active material layer is not particularly limited as long as it has conductivity without causing a chemical change in the battery, and for example, graphite such as natural graphite or artificial graphite; carbon black such as acetylene black, Ketjen black, channel black, furnace black, lamp black, and thermal black; a conductive fiber such as a carbon fiber and a metal fiber; a conductive tube such as a carbon nanotube; fluorocarbon; metal powders such as aluminum, and nickel powders; a conductive whisker such as zinc oxide and potassium titanate; a conductive metal oxide such as titanium oxide; a conductive material such as polyphenylene derivative, and the like may be used. A content of the conductive material in the negative electrode active material layer may be 0.01 part by weight to 30 parts by weight, and preferably 0.03 part by weight to 25 parts by weight on the basis of 100 parts by weight of the negative electrode active material layer.

In an exemplary embodiment of the present application, the positive electrode may include a positive electrode current collector and a positive electrode active material layer formed on the positive electrode current collector and including the aforementioned positive electrode active material.

The positive electrode current collector is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector may typically have a thickness of 1 µm to 500 µm, and a surface of the positive electrode current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

In an exemplary embodiment of the present application, the negative electrode may include a negative electrode current collector and a negative electrode active material layer formed on the negative electrode current collector and including the negative electrode active material.

The negative electrode current collector is not particularly limited as long as it has conductivity without causing a chemical change in the battery. For example, for the negative electrode current collector, copper, stainless steel, aluminum, nickel, titanium, fired carbon, aluminum or stainless steel each surface treated with carbon, nickel, titanium, silver, or the like, or the like may be used. Specifically, transition metals that adsorb carbon well, such as copper and nickel, may be used for the current collector. A thickness of the negative electrode current collector may be 1 µm to 500 µm. However, the thickness of the current collector is not limited thereto.

In an exemplary embodiment of the present application, the positive electrode may further include a positive electrode active material layer including the positive electrode active material, the negative electrode may further include a negative electrode active material layer including the negative electrode active material, and thicknesses of the positive electrode and negative electrode active material layers may be each 10 µm or greater and 500 µm or less. The thickness of the positive electrode active material layer may be 90% to 110%, for example, 95% to 105% of the thickness of the negative electrode active material layer, and the thicknesses may be the same. Specifically, the thicknesses of the positive electrode and negative electrode active material layers may be each 15 µm or greater and 400 µm or less, 20 µm or greater and 300 µm or less, 25 µm or greater and 200 µm or less, or 30 µm or greater and 100 µm or less.

In an exemplary embodiment of the present application, the positive electrode further may include a positive electrode active material layer including the positive electrode active material, a loading amount per unit volume of the positive electrode active material layer may be 250 mg/25 cm² to 900 mg/25 cm², the negative electrode may further include a negative electrode active material layer including the negative electrode active material, and a loading amount per unit volume of the negative electrode active material layer may be 100 mg/25 cm² to 600 mg/25 cm².

Specifically, the loading amount per unit volume of the positive electrode active material layer may be 270 mg/25 cm² to 800 mg/25 cm², 285 mg/25 cm² to 700 mg/25 cm², or 300 mg/25 cm² to 600 mg/25 cm², and the loading amount per unit volume of the negative electrode active material layer may be 120 mg/25 cm² to 500 mg/25 cm², 135 mg/25 cm² to 400 mg/25cm², or 150 mg/25 cm² to 300 mg/25 cm².

The positive electrode and the negative electrode can be manufactured according to a conventional method for manufacturing a positive electrode and a negative electrode, except using the positive electrode and negative electrode active materials described above. Specifically, the electrodes can be manufactured by applying a composition for active material layer formation, including the above-described active material and, optionally, a binder and a conductive material, onto a current collector, followed by drying and roll-pressing. In this case, the types and contents of the positive electrode and negative electrode active materials, the binder, and the conductive material are as described above. The solvent may be a solvent commonly used in the art, such as dimethyl sulfoxide (DMSO), isopropyl alcohol, N-methylpyrrolidone (NMP), acetone, or water, and any one thereof or a mixture of two or more thereof may be used. In consideration of a coating thickness of a slurry and a manufacturing yield, a used amount of the solvent is sufficient if it can dissolve or disperse the active material, the conductive material, and the binder and then, allows for a viscosity capable of exhibiting excellent thickness uniformity when applied to manufacture a positive electrode and a negative electrode. Alternatively, the positive electrode and the negative electrode may be manufactured by laminating, on a current collector, a film obtained by casting the composition for active material layer formation on a separate support and peeling off it from the support.

The separator serves to separate the negative electrode and the positive electrode and to provide a migration path of lithium ions, in which any separator may be used without particular limitation as long as it is typically used as a separator in a secondary battery, and particularly, a separator having high moisture-retention ability for an electrolytic solution as well as a low resistance against migration of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a usual porous non-woven fabric, for example, a non-woven fabric formed of high melting point glass fibers, polyethylene terephthalate fibers, or the like may be used. Furthermore, a coated separator including a ceramic component or polymer material may be used so as to secure heat resistance or mechanical strength, and a separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydrofuran, 2-methyltetrahydrofuran, dimethyl sulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate and diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolytic solution, in which, for example, one or more selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexamethyl phosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving service life characteristics of the battery, suppressing a decrease in battery capacity, improving discharge capacity of the battery, and the like, in addition to the above-described electrolyte components.

The energy density of the lithium secondary battery according to an exemplary embodiment of the present application is 400 Wh/L to 900 Wh/L. Specifically, the energy density of the lithium secondary battery may be 425 Wh/L to 875 Wh/L, 450 Wh/L to 850 Wh/L, 475 Wh/L to 825 Wh/L, or 500 Wh/L to 800 Wh/L. When the above range is satisfied, the energy density of the lithium secondary battery designed in a limited space can be increased, and high-output performance and battery cycle performance can be improved.

The lithium secondary battery according to an exemplary embodiment of the present invention may be a cylindrical battery. The cylindrical battery may mean that a shape of the battery itself including an assembly including a positive electrode, a negative electrode, a separator, and an electrolyte is cylindrical, and specifically, may include a cylindrical can, a battery assembly provided inside the cylindrical can, and a top cap. However, the lithium secondary battery is not limited to this, and may be a prismatic battery or a pouch-type battery.

A further embodiment of the present invention provides a battery module including the cylindrical battery as a unit cell, and a battery pack including the same. Additionally, a battery pack including a cylindrical battery is provided.

An additional exemplary embodiment of the present invention provides a battery module including the aforementioned lithium secondary battery, and a battery pack including the battery module. In addition, a battery pack including the aforementioned lithium secondary battery is provided.

Since the battery module and the battery pack include the secondary battery having high capacity, high-rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Since the lithium secondary battery according to the embodiments of the present invention stably exhibits excellent discharge capacity, output characteristics, and cycle performance, the lithium secondary battery can be used as a power source of a portable device such as a mobile phone, a laptop computer, and a digital camera as well as a medium to large sized device selected from the group consisting of electric vehicles, hybrid electric vehicles, plug-in hybrid electric vehicles and power storage systems. For example, the battery module or battery pack may be used as a power source of a medium to large sized device of any one or more of a power tool; an electric vehicle including an electric vehicle (EV), a hybrid electric vehicle, and a plug-in hybrid electric vehicle (PHEV); or a power storage system.

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

### <Example 1>

A composition for forming a positive electrode active material layer was prepared, including, on the basis of 100 parts by weight of the composition for a positive electrode active material layer, 98.04 parts by weight (single particles and/or quasi-single particles: secondary particles = 50:50 weight ratio) of a lithium composite transition metal compound serving as a positive electrode active material having contents of 93.3 mol% of Ni, 4.9 mol% of Co, and 1.8 mol% of Mn in metals except for lithium and including single particles and/or quasi-single particles and secondary particles, 1 part by weight of PVDF serving as a binder, and a CNT pre-dispersion solution including 0.8 part by weight of CNT serving as a conductive material and 0.16 part by weight of a dispersant. In this case, the single particles and/or quasi-single particles were prepared with a size of D50 = 3 µm and the secondary particles were prepared with a size of D50 = 7 µm by an airflow pulverization method. An aluminum foil having a thickness of 30 µm was coated with the composition for forming a positive electrode active material layer so as to have a thickness of 103 µm in a dry state, and then dried to prepare a positive electrode including a positive electrode active material layer.

A composition for forming a negative electrode active material layer was prepared, including, on the basis of 100 parts by weight of the composition for forming a negative electrode active material layer, 97.7 parts by weight of, as a negative electrode active material, graphite (artificial graphite: natural graphite = 70:30 weight ratio, 90 parts by weight based on 100 parts by weight of the negative electrode active material) and SiO (10 parts by weight based on 100 parts by weight of the negative electrode active material), 1.15 parts by weight of SBR (styrene-butadiene rubber) as a binder and 1 part by weight of CMC (carboxymethyl cellulose), and further including a CNT pre-dispersion solution including 0.09 part by weight of a dispersant and 0.06 part by weight of single-walled CNT. In this case, the silicon oxide was prepared with a size of D50 = 5 µm and the graphite was prepared with a size of D50 = 17 µm by an airflow pulverization method. A copper foil having a thickness of 15 µm was coated with the composition for forming a negative electrode active material layer so as to have a thickness of 86 µm in a dry state, and then dried to prepare a negative electrode including a negative electrode active material layer.

The positive electrode and the negative electrode were stacked with a separator interposed therebetween, and an electrolytic solution (1.0 MLiPF₆, ethylene carbonate (EC)/ethyl methyl carbonate (EMC) = 30/70 (vol %), vinylene carbonate (VC) 1.5%) was injected to prepare a battery.

### <Example 2>

A positive electrode was prepared in the same manner as in Example 1, except that the weight ratio of the lithium composite transition metal compound in the form of single particles and/or quasi-single particles and secondary particles was 80:20 based on 100 parts by weight of the positive electrode active material.

### <Example 3>

A positive electrode was prepared in the same manner as in Example 1, except that the single particles and/or quasi-single particles were 100 parts by weight based on 100 parts by weight of the positive electrode active material.

### <Example 4>

A positive electrode and a negative electrode were prepared in the same manner as in Example 3, except that the single particles and/or quasi-single particles included in the positive electrode active material layer were prepared with a size of D50 = 7 µm, and D50 of SiO included in the negative electrode active material layer was 10 µm.

### <Example 5>

A negative electrode was prepared in the same manner as in Example 3, except that D50 of SiO included in the negative electrode active material layer was 10 µm.

### <Example 6>

A negative electrode was prepared in the same manner as in Example 3, except that SiO was 5 parts by weight based on 100 parts by weight of the negative electrode active material.

### <Example 7>

A positive electrode was prepared in the same manner as in Example 1, except that D50 of the single particles and/or quasi-single particles included in the positive electrode active material layer was 4.5 µm.

### <Example 8>

A positive electrode was prepared in the same manner as in Example 2, except that D50 of the single particles and/or quasi-single particles included in the positive electrode active material layer was 4.5 µm.

### <Example 9>

A positive electrode and a negative electrode were prepared in the same manner as in Example 2, except that D50 of the single particle and/or quasi-single particle included in the positive electrode active material layer was 1 µm, D50 of the lithium composite transition metal compound in the form of secondary particles was 14 µm, and D50 of SiO included in the negative electrode active material layer was 13.5 µm.

### <Comparative Example 1>

A positive electrode was prepared in the same manner as in Example 1, except that the lithium composite transition metal compound in the form of secondary particles was included in an amount of 100 parts by weight based on 100 parts by weight of the positive electrode active material.

### <Comparative Example 2>

A positive electrode was prepared in the same manner as in Example 3, except that D50 of the single particles and/or quasi-single particles included in the positive electrode active material layer was 0.5 µm.

### <Comparative Example 3>

A positive electrode was prepared in the same manner as in Example 3, except that D50 of the single particles and/or quasi-single particles included in the positive electrode active material layer was 15 µm.

### <Comparative Example 4>

A negative electrode was prepared in the same manner as in Example 3, except that D50 of SiO included in the negative electrode active material layer was 0.7 µm.

### <Comparative Example 5>

A negative electrode was prepared in the same manner as in Example 3, except that graphite was included in an amount of 100 parts by weight based on 100 parts by weight of the negative electrode active material.

### <Experimental Example 1> Evaluation of Energy Density Characteristics

The energy density of the prepared batteries was evaluated, and the results are shown in Table 1 below.

The energy density of Example 1 was derived by the following calculation. cell volume measurement (unit: L): width (100 mm) x length (300 mm) x thickness (8 mm) cell energy measurement (unit: Wh): cell capacity (40 Ah) x average voltage (3.65 V) energy density measurement (unit: Wh/L): cell energy (Wh)/cell volume (L) = 608 W/L

### <Experimental Example 2> Evaluation of Service Life (capacity retention rate) Characteristics

The prepared batteries were charged and discharged to evaluate the capacity retention rate, and the results are shown in Table 1 below.

The charge and discharge were performed at 0.1C for the first cycle and the second cycle, and the charge and discharge were performed at 0.5C from the third cycle. At the 100th cycle, the charging and discharging were terminated in a charge state (with lithium contained in the negative electrode).
Charging conditions: CC (constant current)/CV (constant voltage) (4.25 V/0.005 C current cut-off)
Discharging conditions: CC (constant current) condition 2.5 V

The capacity retention rate was derived by the following calculation. capacity retention rate (%) = (100 times discharge capacity/one time discharge capacity) × 100(%)

Table 1 below shows the values for energy density (based on Example 1, %) and capacity retention rate (100 cycles, %) of the Examples and Comparative Examples.

**[Table 1]**

| | Energy density (based on Example 1, %) | Capacity retention rate (100 cycles, %) |
|---|---|---|
| Example 1 | 100 | 92 |
| Example 2 | 104 | 97 |
| Example 3 | 110 | 94 |
| Example 4 | 110 | 95 |
| Example 5 | 109 | 95 |
| Example 6 | 107 | 95 |
| Example 7 | 99 | 91 |
| Example 8 | 102 | 96 |
| Example 9 | 99 | 89 |
| Comparative Example 1 | 90 | 78 |
| Comparative Example 2 | 98 | 80 |
| Comparative Example 3 | 37 | 82 |
| Comparative Example 4 | 99 | 79 |
| Comparative Example 5 | 91 | 75 |

The present application can increase the energy density of a lithium secondary battery, improve high-power performance, and also improve battery cycle performance. When Examples 1 to 9 were compared with Comparative Examples 1 to 5, it was confirmed that the energy density and/or capacity retention rate were excellent. Specifically, Examples 1 to 3 show a performance comparison according to the content of single particles and/or quasi-single particles of the positive electrode, and it was confirmed that as the content of single particles and/or quasi-single particles increases, the energy density increases and the service life performance also has the equivalent or superior characteristics.

Also in Example 4 in which the D50 particle diameter of the positive electrode single particles and/or quasi-single particles was increased, the energy density and capacity retention rate were excellent as in the above, and in Examples 5 and 6, the energy density and capacity retention rate were excellent even when D50 of SiO applied to the negative electrode increased or the content was reduced.

In Examples 7 to 9 in which D50 of the positive electrode single particles and/or quasi-single particles and SiO is within the ranges of the present application, and the difference is less than 1 µm or greater than 12 µm, it was confirmed that the energy density and capacity retention rate were excellent, but lower than in Examples 1 or 2.

That is, in Examples 7 and 8, the D50 particle diameter of the positive electrode single particles and/or quasi-single particles increases compared to Examples 1 and 2, respectively, so that the relative diffusion resistance increased and lithium precipitation occurred, so that the service life performance may deteriorate. In Example 9 in which the difference in particle diameter of D50 between the positive electrode single particles and/or the quasi-single particles and SiO increased, the side reactions occurred, so that the service life performance may deteriorate.

Comparative Example 1 corresponds to a case in which single particles and/or quasi-single particles were not applied to the positive electrode, Comparative Examples 2 and 3 corresponds to a case in which D50 of the single particles and/or quasi-single particles of the positive electrode was below or above the range of the present application, Comparative Example 4 corresponds to a case in which the range of D50 of SiO was below the range of the present application, and Comparative Example 5 corresponds to a case in which SiO was not applied to the negative electrode.

In these cases, it was confirmed that the energy density and capacity retention rate were lower compared to the Examples.

Specifically, when D50 of the positive electrode single particles and/or quasi-single particles is formed to be below the range of the present application, as in Comparative Example 2, it was confirmed that even if D50 of silicon oxide included in the negative electrode is larger, the reactivity with the electrolytic solution increases due to the increased specific surface area of the single particles and/or quasi-single particles, resulting in a decrease in the service life performance due to an increase in side reactions. In addition, when the particle diameter of single particles and/or quasi-single particles decreases, the particle strength decreases, making it difficult to manufacture an electrode with a desired thickness during the rolling process when manufacturing the electrode, which also results in a decrease in energy density.

In Comparative Example 3 in which D50 of the single particles and/or quasi-single particles of the positive electrode exceeds the range of the present invention, the particle size increases, making it difficult to perform charging/discharging. Accordingly, it was confirmed that the service life decreased and the energy density decreased due to the reduction in capacity.

In Comparative Example 4 in which D50 of SiO included in the negative electrode active material was formed to be below the range of the present invention, it was confirmed that the reactivity with the electrolytic solution increased due to the increased specific surface area of SiO, resulting in a decrease in the service life performance due to an increase in side reactions.

In Comparative Examples 1 and 5 in which the single particles and/or quasi-single particles were not included in the positive electrode and SiO was not included in the negative electrode, respectively, and it was confirmed that the desired energy density could not be achieved compared to the Examples.

## Claims

1. A lithium secondary battery comprising:
a positive electrode comprising a positive electrode active material;
a negative electrode comprising a negative electrode active material;
a separator provided between the positive electrode and the negative electrode; and
an electrolyte,
wherein the positive electrode active material comprises a lithium composite transition metal compound comprising nickel (Ni), cobalt (Co), and manganese (Mn),
wherein the lithium composite transition metal compound comprises at least one of single particles and quasi-single particles, and an average particle diameter (D50) of at least one of the single particles and the quasi-single particles is 1 µm or greater and 10 µm or less,
wherein the single particles are each composed of one nodule, and the quasi-single particles are each a composite composed of 30 or fewer nodules,
wherein the negative electrode active material comprises a silicon oxide represented by SiOₓ (0 < x < 2), and an average particle diameter (D50) of the silicon oxide represented by SiOₓ (0 < x < 2) is 1 µm or greater, and
wherein the average particle diameter (D50) of at least one of the single particles and the quasi-single particles is smaller than the average particle diameter (D50) of the silicon oxide represented by SiOₓ (0 < x < 2).

2. The lithium secondary battery of claim 1, wherein the average particle diameter (D50) of at least one of the single particles and quasi-single particles is 10 µm or less, and
wherein the average particle diameter (D50) of the silicon oxide represented by SiOₓ (0 < x < 2) is less than 15 µm.

3. The lithium secondary battery of claim 1, wherein the average particle diameter (D50) of at least one of the single particles and quasi-single particles is 1 µm to 12 µm smaller than the average particle diameter (D50) of the silicon oxide represented by SiOₓ (0 < x < 2).

4. The lithium secondary battery of claim 1, wherein the silicon oxide represented by SiOₓ (0 < x < 2) is doped with magnesium metal or lithium metal.

5. The lithium secondary battery of claim 1, wherein the lithium composite transition metal compound further comprises secondary particles, and
wherein the average particle diameter (D50) of at least one of the single particles and quasi-single particles is smaller than an average particle diameter (D50) of the secondary particles.

6. The lithium secondary battery of claim 5, wherein the average particle diameter (D50) of at least one of the single particles and quasi-single particles is 1 µm to 18 µm smaller than the average particle diameter (D50) of the secondary particles.

7. The lithium secondary battery of claim 1, wherein the negative electrode active material further comprises graphite, and
wherein the average particle diameter (D50) of the silicon oxide represented by SiOₓ (0 < x < 2) is smaller than an average particle diameter (D50) of the graphite.

8. The lithium secondary battery of claim 7, wherein the average particle diameter (D50) of the silicon oxide represented by SiOₓ (0 < x < 2) is 1 µm to 25 µm smaller than the average particle diameter (D50) of the graphite.

9. The lithium secondary battery of claim 1, wherein the lithium composite transition metal compound further comprises secondary particles,
wherein the negative electrode active material further comprises graphite, and
wherein when average particle diameters (D50) of the secondary particles, at least one of the single particles and the quasi-single particles, the graphite, and the silicon oxide represented by SiOₓ (0 < x < 2) are respectively denoted as A, B, C and D, a relationship B < D ≤ A < C is satisfied.

10. The lithium secondary battery of claim 1, wherein the negative electrode active material further comprises graphite, and
wherein average particle diameters (D50) of at least one of the single particles and quasi-single particles, the graphite, and the silicon oxide represented by SiOₓ (0 < x < 2) are respectively denoted as B, C and D, a relationship B < D < C is satisfied.

11. The lithium secondary battery of claim 1, wherein the positive electrode active material further comprises aluminum.

12. The lithium secondary battery of claim 1, wherein at least one of the single particles and quasi-single particles is included in an amount of 15 to 100 parts by weight relative to 100 parts by weight of the positive electrode active material, and
wherein the silicon oxide represented by SiOₓ (0 < x < 2) is included in an amount of 3 to 30 parts by weight relative to 100 parts by weight of the negative electrode active material.

13. The lithium secondary battery of claim 1, wherein the lithium composite transition metal compound comprises 80 mol% or more of nickel in metals except for lithium.

14. The lithium secondary battery of claim 1, wherein the positive electrode further comprises a positive electrode binder and a conductive material.

15. The lithium secondary battery of claim 1, wherein the lithium secondary battery is a cylindrical battery.

16. The lithium secondary battery of claim 1, wherein a ratio of the average particle diameter (D50) of at least one of the single particles and quasi-single particles to the average particle diameter (D50) of the silicon oxide represented by SiOₓ (0 < x < 2) is 1.5:2 to 1.5:20.

17. The lithium secondary battery of claim 1, wherein the positive electrode further comprises a positive electrode active material layer comprising the positive electrode active material, and the negative electrode further comprises a negative electrode active material layer comprising the negative electrode active material, and
wherein thicknesses of the positive electrode and negative electrode active material layers are each 10 µm or greater and 500 µm or less.

18. The lithium secondary battery of claim 1, wherein the positive electrode further comprises a positive electrode active material layer comprising the positive electrode active material, and a loading amount per unit volume of the positive electrode active material layer is 250 mg/25 cm² to 900 mg/25cm², and
wherein the negative electrode further comprises a negative electrode active material layer comprising the negative electrode active material, and a loading amount per unit volume of the negative electrode active material layer is 100 mg/25 cm² to 600 mg/25cm².

19. The lithium secondary battery of claim 1, wherein an energy density of the lithium secondary battery is 400 Wh/L to 900 Wh/L.

20. A battery module comprising the lithium secondary battery of any one of claims 1 to 19.

21. A battery pack comprising the battery module of claim 20.

22. A battery pack comprising the lithium secondary battery of any one of claims 1 to 19.
